# EUROPEAN PATENT SPECIFICATION

(11) **EP 4 177 077 B1**
(45) Date of publication and mention of the grant of the patent: **19.02.2025**
(21) Application number: 22204428.1
(22) Date of filing: 28.10.2022
(51) Int. Cl.: B60C 7/14, B60C 7/18, B60B 9/26

(54) **NON-PNEUMATIC TIRE AND WHEEL ASSEMBLY AND METHOD OF MANUFACTURING**
LUFTLOSER REIFEN UND RADANORDNUNG SOWIE VERFAHREN ZUR HERSTELLUNG
ENSEMBLE ROUE ET PNEU NON PNEUMATIQUE ET PROCÉDÉ DE FABRICATION

(30) Priority: 08.11.2021 US 202163277036 P; 20.10.2022 US 202218048137
(43) Date of publication of application: 10.05.2023
(73) Proprietor: The Goodyear Tire & Rubber Company, Akron, OH 44316 (US)
(72) Inventor: SIGLER, Wesley Glen, Baberton, 44203 (US); LETTIERI, Joseph Carmine, Hudson, 44236 (US); MYERS, Ann Elizabeth, Cuyahoga Falls, 44221 (US); MILLER, Andrew James, Akron, 44305 (US); KANDEL, Kurtis Dale, Louisville, 44641 (US)
(74) Representative: Kutsch, Bernd

(56) References cited:
- EP-A1- 4 023 461
- WO-A1-03/018332
- WO-A1-2006/116807
- CN-A- 109 591 518
- US-B1- 6 286 572
- US-S- D 803 749
- US-S- D 803 749
- US-S- D 804 390
- US-S- D 909 286
- US-S- D 909 286

## Description

### Field of the Invention

The invention relates in general to a vehicle wheel, and more particularly to a non-pneumatic tire and wheel assembly an its method of manufacturing.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus an improved non-pneumatic tire is desired that has all the features of the pneumatic tires without the drawback of the need for air inflation is desired. It is also desired to have an improved non-pneumatic tire that has longer tread life as compared to a pneumatic tire of the same size.

WO 03/018332 A1 describes a non-pneumatic tire and wheel assembly in accordance with the preamble of claim 1.

Further non-pneumatic tire and wheel assemblies are known from EP 4 023 461 A1, WO 2006/116807, US 6,286,572 B1, US D804,390 A, US D803,749 S1, US D909,286 S1 and CN 109 591 518 B.

### Summary of the Invention

The invention relates to a non-pneumatic tire and wheel assembly in accordance with claim 1 and to a method in accordance with claim 10.

Dependent claims refer to preferred embodiments of the invention.

The invention provides in a first preferred aspect a non-pneumatic tire and wheel assembly comprising: a wheel, a spoke ring structure having an inner ring that is mounted on an outer rim mounting surface of the wheel, wherein the spoke ring structure has a plurality of spoke members, and an outer tread ring mounted on the outer circumference of the spoke ring, wherein the wheel is axially recessed within the non-pneumatic tire and wheel assembly.

The invention provides in a second preferred aspect a non-pneumatic tire and wheel assembly comprising: a wheel, a spoke ring structure having an inner ring that is mounted on an outer rim mounting surface of the wheel, wherein the spoke ring structure has a plurality of spoke members, and an outer tread ring mounted on the outer circumference of the spoke ring, wherein at least one of the spoke members has an axially outer edge, wherein the axially outer edge is radiused.

### Definitions

"Aspect Ratio" means the ratio of a tire's section height to its section width.

"Axial" and "axially" means the lines or directions that are parallel to the axis of rotation of the tire.

"Circumferential" means lines or directions extending along the pewheeleter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of the tire.

### Brief Description of the Drawings

The invention will be described by way of example and with reference to the accompanying drawings in which:
FIG. 1 is a front view of a non-pneumatic tire and wheel assembly of the present invention;
FIG. 2 is a cross-sectional view of the non-pneumatic tire and wheel assembly of FIG. 1;
FIG. 3 is a close-up front view of a portion of the spoke ring assembly;
FIG. 4 is an exploded view of the non-pneumatic tire and wheel assembly of FIG. 1;
FIG. 5 is a cross-sectional view of one half of the non-pneumatic tire and wheel assembly of FIG. 1;
FIG. 6 is a close-up cross-sectional view of the spoke structure of the non-pneumatic tire and wheel assembly of FIG. 1;
FIG. 7 is a cross-sectional perspective view of the spoke structure and tread;
FIG. 8A is a side view of the outboard spoke ring, while FIG. 8B is a perspective side view of the outboard spoke ring of FIG. 8A;
FIG. 9A is a side view of the middle spoke ring, while FIG. 9B is a perspective side view of the middle spoke ring of FIG. 9A;
FIG. 10A is a side view of the outboard spoke ring, while FIG. 10B is a perspective side view of the outboard spoke ring of FIG. 10A; and
FIG. 11 is a cross-sectional view of a shearband of the non-pneumatic tire and wheel assembly of FIG. 1.

### Detailed Description of Preferred Embodiment of the Invention

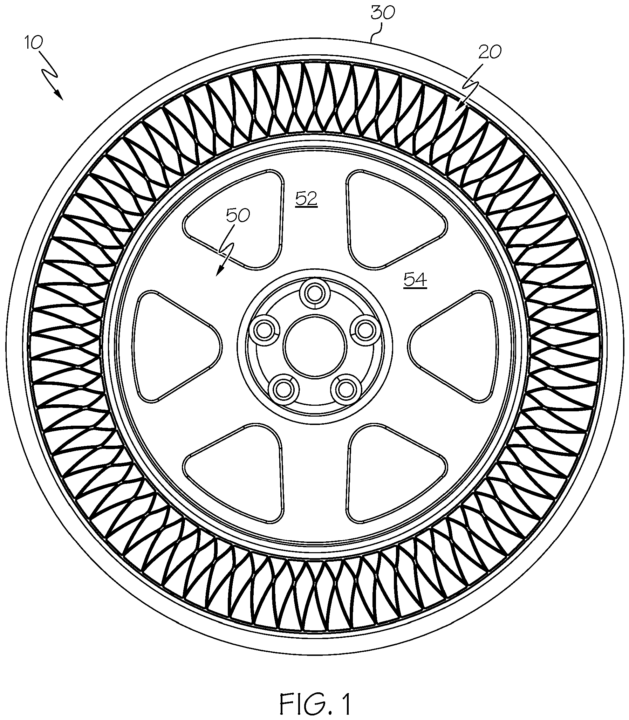

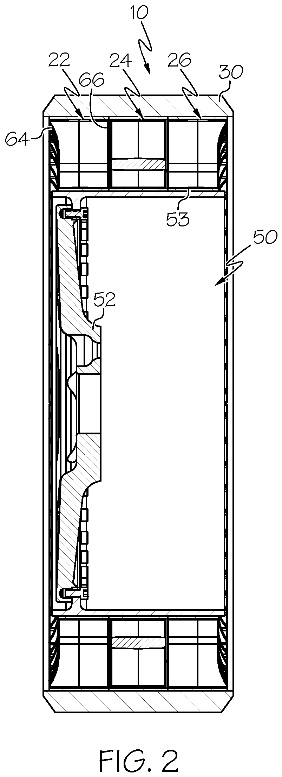

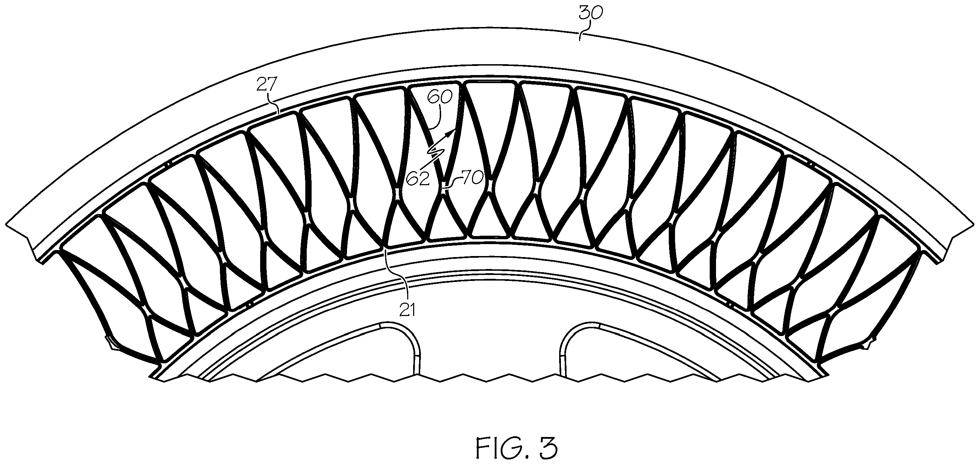

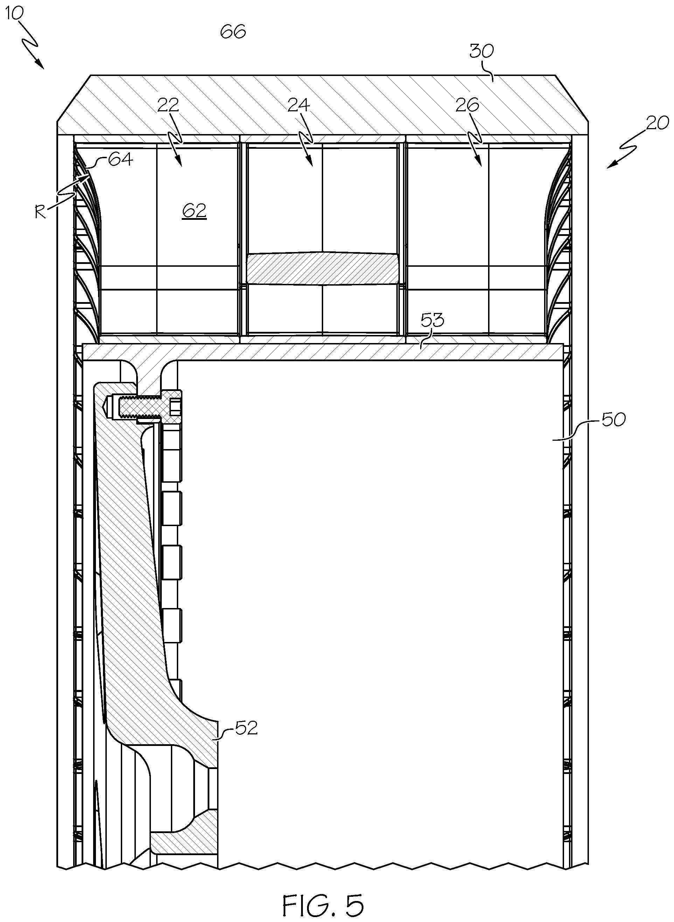

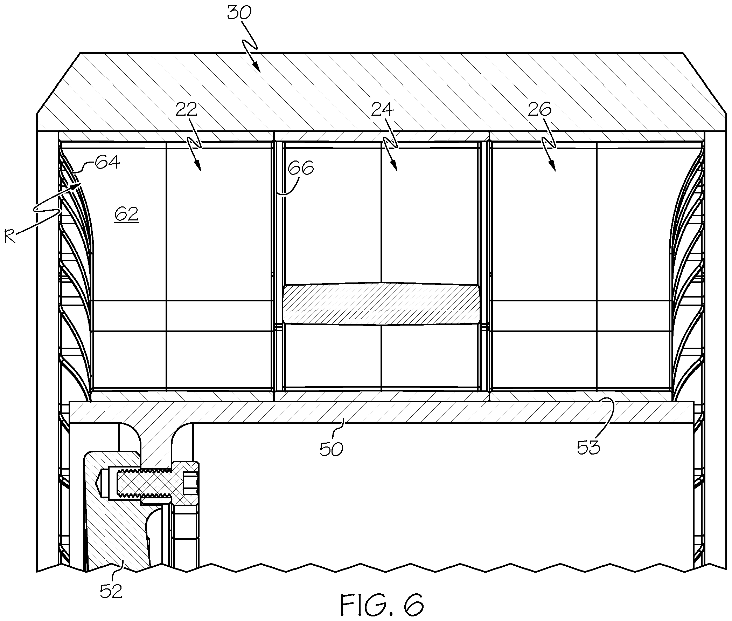

Referring to FIGS. 1 through 10, a non-pneumatic tire and wheel assembly 10 of the present invention is shown. The non-pneumatic tire and wheel assembly 10 includes an outer annular tread ring 30, a spoke ring structure 20, and a wheel 50. The outer annular tread ring 30 is preferably a one-piece annular structure that is formed of a polymer, rubber or other desired elastomer. The tread ring 30 may be molded and cured as a one-piece ring and is mounted on the outer periphery of the spoke ring structure 20. The outer tread surface of the tread ring 30 may include tread elements such as ribs, blocks, lugs, grooves, and sipes as desired in order to improve the performance of the tire in various conditions. Preferably, a shear band 31 is provided, which is an annular structure that is located radially inward of the tread ring 30 between tread ring 30 and spoke ring structure 20 and functions to transfer the load from the bottom of the tire which is in contact with the ground to the spokes and to the hub, creating a top loading structure. The annular structure is called a shear band 31 because the preferred form of deformation is shear over bending.

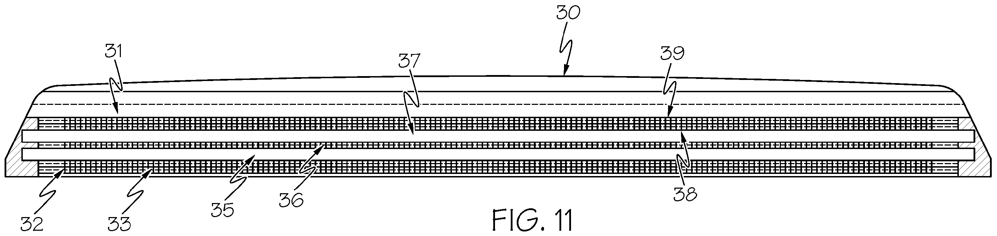

A first embodiment of a shear band 31 is shown in FIG. 11. The shear band 31 preferably includes a first, second and third reinforcement layer 32, 33, 36. Each reinforcement layer 32, 33, 36 is preferably formed of a plurality of closely spaced parallel reinforcement cords. The parallel reinforcement cords may be formed from a calendared fabric so that the reinforcement cords are embedded in an elastomeric coating. Preferably, each reinforcement layer 32, 33, 36 is formed from spirally winding a single end cord. Preferably, the single end cord has multiple filaments.

The first and second reinforcement layers 32, 33 are preferably the radially innermost reinforcement layers of the shear band 31, and the second reinforcement layer 33 is located radially outward of the first reinforcement layer 32. The third reinforcement layer 36 is located radially outward of the second reinforcement layer 33. The preferably inextensible reinforcement cords of each layer 32, 33, 36 are preferably angled in the range of five degrees or less with respect to the tire equatorial plane. The reinforcing cords of the first and second reinforcement layers 32, 33 may be suitable tire belt reinforcements, such as monofilaments or cords of steel, aramid, and/or other high modulus textiles. For example, the reinforcing cords may be steel cords of four wires of 0.28 mm diameter (4 x 0.28) or 0.22 mm diameter. In another example, the reinforcing cords may be steel cords of 6 wires, with five wires surrounding a central wire (5 +1) construction.

The third reinforcement layer 36 is preferably separated from the second reinforcement layer 33 by a first shear layer 35. The shear band 31 preferably further comprises a second shear layer 37 located radially outward of the third reinforcement layer 36. The first and second shear layer 35, 37 is preferably formed of an elastomer or rubber having a shear modulus in the range of 3 MPa to 30 MPa, or more preferably in the range of 10 MPa to 20 MPa. The shear modulus is defined using a pure shear deformation test, recording the stress and strain, and determining the slope of the resulting stress-strain curve.

The shear band 31 preferably further includes a first angled belt 38 and a second angled belt 39. The first angled belt 38 is located radially outward of the second shear layer 37, and the second angled belt 39 is located radially outward of the first angled belt 38. The first and second angled belts 38, 39 preferably each have parallel reinforcement cords that are embedded in an elastomeric coating. The parallel reinforcement cords are preferably angled in the range of 15 to 30 degrees with respect to the tire equatorial plane. Preferably, the angle of the parallel reinforcement cords is in the range of from 20 to 25 degrees. Preferably, the angle of the reinforcement cords of the first angled belt 38 is in the opposite direction of the angle of the reinforcement cords in the second angled belt 39. It is additionally preferred that the reinforcement cords are inextensible.

The shear band 31 has an overall shear stiffness GA. The shear stiffness GA may be determined by measuring the deflection on a representative test specimen taken from the shear band 31. The upper surface of the test specimen is subjected to a lateral shear force F. The test specimen is a representative sample taken from the shear band and having the same radial thickness as the shearband. The shear stiffness GA is then calculated from the following equation: GA=F*L/ΔX, where F is the shear load, L is the shear layer thickness, and ΔX is the shear deflection. It is preferred that GA be in the range of from 15,000 N to 35,000N, and more preferably 25,000N.

The shear band 31 has an overall bending stiffness El. The bending stiffness El may be determined from beam mechanics using the three point bending test. It represents the case of a beam resting on two roller supports and subjected to a concentrated load applied in the middle of the beam. The bending stiffness EI is determined from the following equation: EI = PL3/48* ΔX, where P is the load, L is the beam length, and ΔX is the deflection. It is preferred that EI be in the range of 270 E6 N-mm² plus or minus 25%.

### Spoke Ring Structure

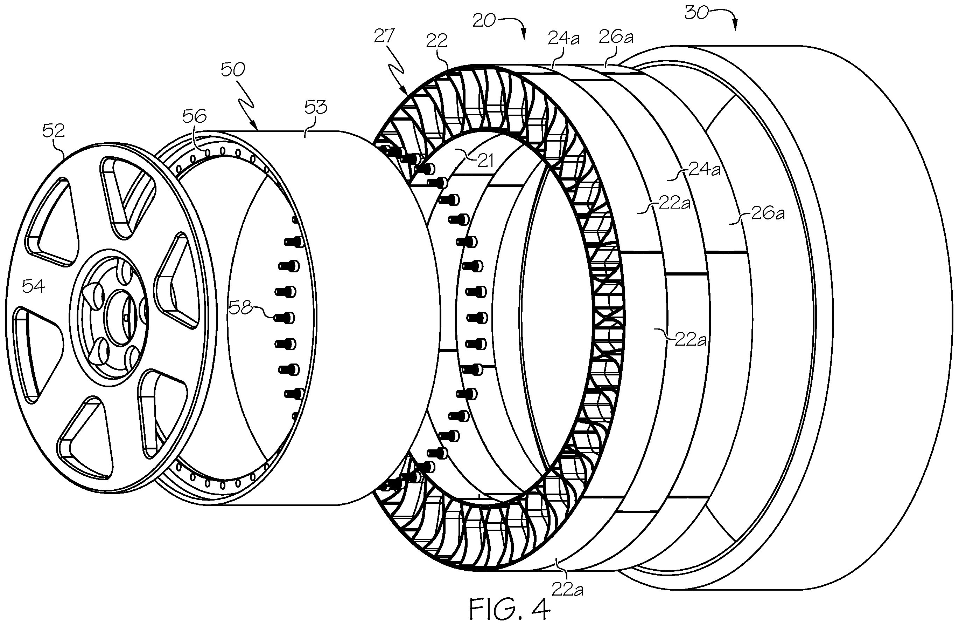

The non-pneumatic tire and wheel assembly 10 includes a spoke ring structure 20. The spoke ring structure 20 has at least one layer of spoke rings 22, and preferably at least two spoke rings 22, 24. FIGS. 4-5 illustrates a non-pneumatic tire and wheel assembly having three spoke rings 22, 24, 26, that are preferably axially adjacent.

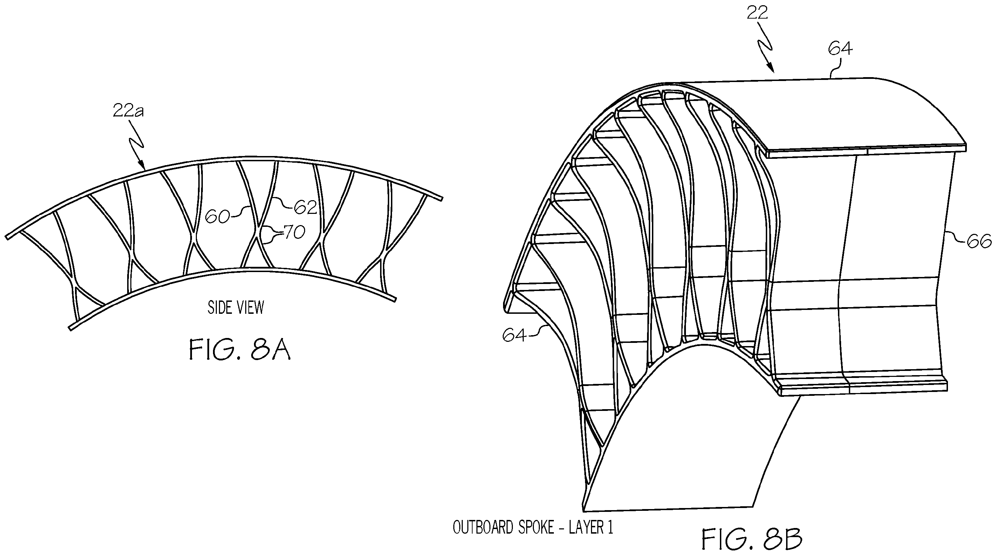

Each spoke ring 22, 24, 26 may be an integrally formed ring or may be formed from a plurality of sectors 22a, 24a, 26a respectively that are assembled to form the ring. Fig. 8a illustrates a sector 22a used to form the spoke ring 22. There are for example 6 sectors used to form the spoke ring 22, although there may be more or less sectors to form the ring. As shown in Fig 8b, the spoke ring 22 is the outboard spoke ring that faces axially outward when mounted on a vehicle. The spoke ring 22 has a plurality of preferably X shaped spokes formed from a first spoke member 60 that is joined to a second spoke member 62. The first and second spoke member 60, 62 are joined together at a junction 70 to form a preferably X-shaped spoke. The first and second spoke members 60, 62 may be straight or curved. The number of spokes may vary, for example, from 15 to 60 depending upon the vehicle weight and desired spring rate. The outboard spoke ring has an axially outer edge 64 that is radiused. The outboard spoke ring 22 has an axially inner edge 66 that is not radiused and is straight in the radial direction. The outer tread ring 30 extends axially outward of the center disk 52 of the wheel, so that the wheel is recessed to reduce noise.

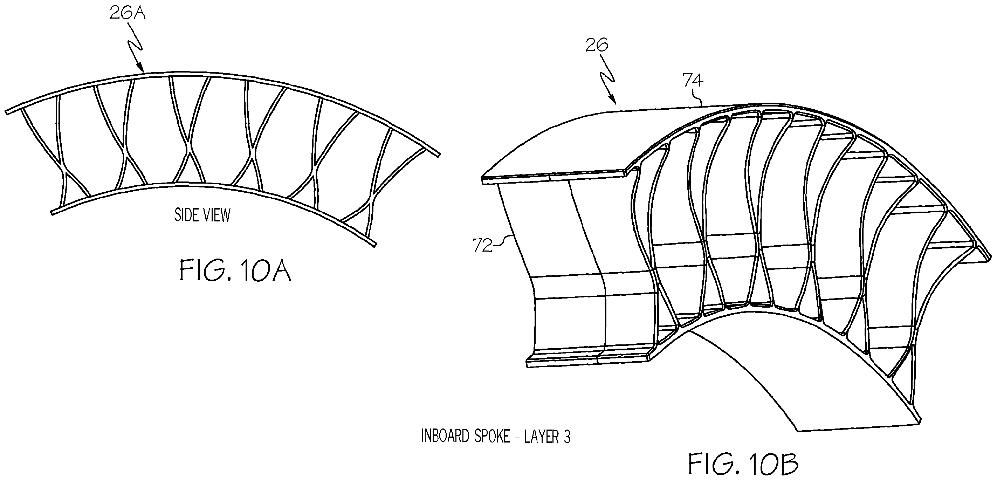

FIG. 10A illustrates a sector 26A of the inboard spoke ring 26. The inboard spoke ring 26 is the same as the spoke ring 22, except for the following differences. The axially outer edge 74 of the inboard spoke ring 26 is radiused, while the axially inner edge 72 is straight, or aligned with the radial direction.

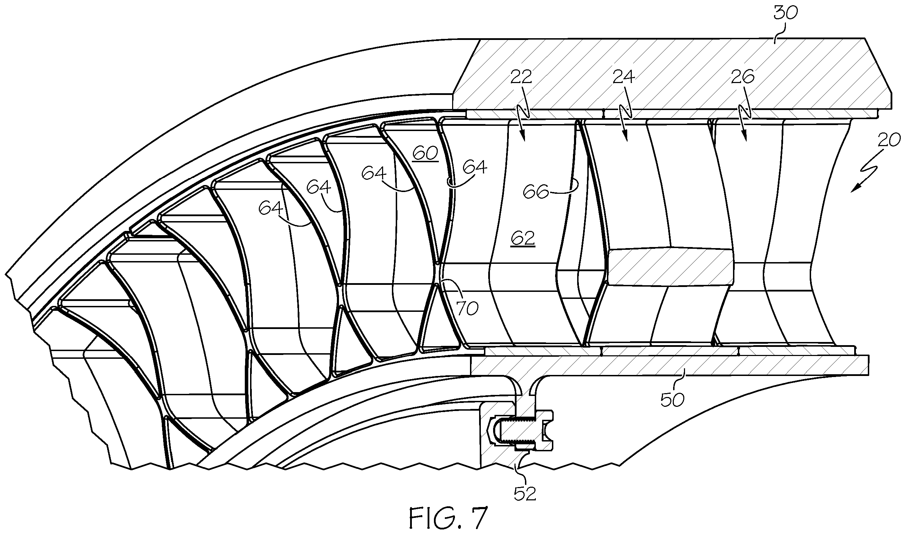

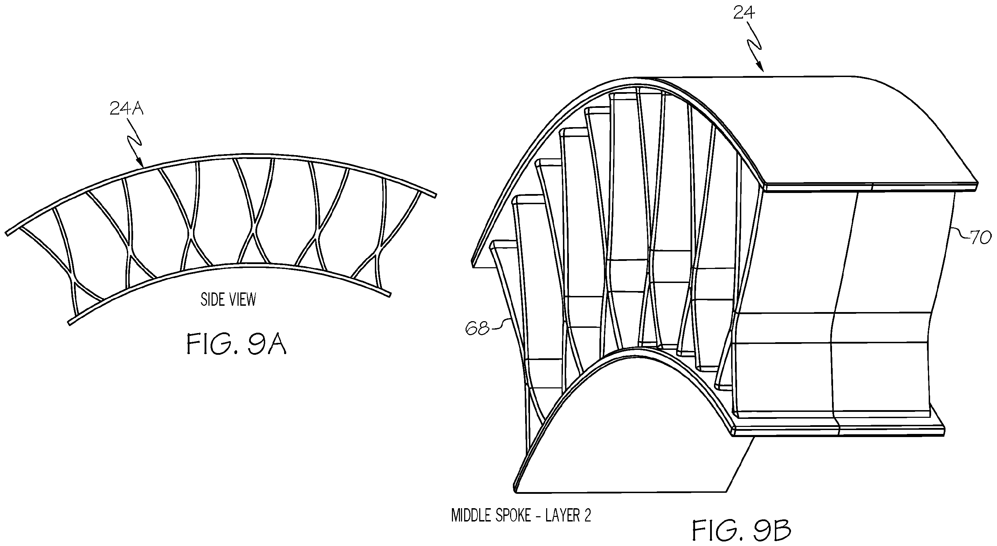

FIG. 9A illustrates a sector of the middle spoke ring 24. The middle spoke ring 24 is the same as the spoke ring 22, except for the following differences. The axially outer edge 68 and axially inner edge 70 of the middle spoke ring 24 is straight or aligned with the radial direction. Additionally, as shown in FIG. 7, the middle spoke ring is clocked so that it is not in alignment with the X spokes of spoke rings 22 or 26.

Each spoke ring 22, 24, 26 has an inner portion 21 that is mounted on the wheel rim mounting surface 53, and an outer portion 27 that is connected to the inner surface of the tread ring 3024. The inner portion 21 has an interference fit on the outer rim mounting surface 53 of the wheel 50.

The radius R of the radiused outer edges may range from 25.4 mm to 50.8 mm. The scalloped or radiused outer edges allow the wheel to be recessed axially inward of the spoke and tread ring structure.

The spoke ring structures 22, 24, 26 are preferably made of a resilient and/or moldable polymeric material such as but not limited to, a thermoplastic elastomer, natural rubber, styrene butadiene rubber, polybutadiene rubber or EPDM rubber or a blend of two or more of these materials which can be utilized in either injection molding or compression molding. The material of the spoke ring structure is selected based upon one or more of the following material properties. The tensile (Young's) modulus of the spoke disk material is preferably in the range of 5 MPa to 100 MPa, and more preferably in the range of 10 MPa to 70 MPa.

The wheel 50 is best shown in Fig. 4 and has an annular outer rim mounting surface 53 for receiving the inner portion 21 of each of the spoke ring structures 22, 24, 26. The wheel further includes a recessed center disk 52 having a plurality of bolt holes 54 for connecting the wheel assembly to a vehicle. The center disk is mounted to an outer flange 56 via a plurality of bolts 58. The wheel is preferably formed of powder coated aluminum.

## Claims

1. A non-pneumatic tire and wheel assembly comprising a wheel structure (50), a spoke ring structure (20) formed of one or more segments (22a, 24a, 26a) arranged to form an annular spoke ring, wherein the spoke ring structure (20) has a plurality of spoke members (60, 62), and a radially outer tread ring (30) mounted on the outer circumference of the spoke ring structure (20), and wherein the spoke ring structure (20) is attached to a radially outer wheel structure mounting surface of the wheel structure (40) via an interference fit, **characterized in that** the assembly further comprises one or more of the following features:
(i) a radially inner portion of the spoke ring structure (20) has an axial width less than the axial width of a radially outer portion of the spoke ring structure (20);
(ii) the spoke structure (20) comprises a plurality of axially adjacent spoke rings (22, 24, 26);
(iii) each spoke member (60, 62) has a radially inner portion and a radially outer portion, wherein the radially inner portion has an axial width less than the radially outer portion.

2. The non-pneumatic tire and wheel assembly of claim 1 wherein the tread ring (30) has one or more layers (32, 33, 36) of reinforced fabric formed of parallel reinforcement cords, wherein the reinforcement cords are aligned in the circumferential direction of the non-pneumatic tire and wheel assembly (10).

3. The non-pneumatic tire and wheel assembly of at least one of the previous claims wherein the spoke members (60, 62) of the spoke ring structure (20) are joined together at a junction to form an X-shaped spoke.

4. The non-pneumatic tire and wheel assembly of at least one of the previous claims wherein the spoke ring structure (20) is formed of a polymer material having a tensile modulus in the range of 15 to 100 MPa or in a range of from 10 MPa to 70 MPa.

5. The non-pneumatic tire and wheel assembly of at least one of the previous claims wherein the wheel structure (50) is axially recessed within the non-pneumatic tire and wheel assembly (10) with respect to the maximum axial width of the spoke ring structure (20).

6. The non-pneumatic tire and wheel assembly of at least one of the previous claims wherein at least one or all of the spoke members (60, 62) has/have an axially outer edge that is radiused or scalloped.

7. The non-pneumatic tire and wheel assembly of at least one of the previous claims wherein at least one or all of the spoke members (60, 62) has/have an axially outer edge that is radiused or scalloped with a radius of curvature in a range of from 12.7 mm to 50.8 mm or of from 25.4 mm to 38.1 mm.

8. The non-pneumatic tire and wheel assembly of at least one of the previous claims wherein the spoke structure (20) comprises two, three or four axially adjacent spoke rings (22, 24, 26).

9. The non-pneumatic tire and wheel assembly of claim 8 wherein at least one or all of said adjacent spoke rings (22, 24, 26) is an integrally formed ring or is a spoke ring (22, 24, 26) formed from a plurality of sectors (22a, 24a, 26a), preferably three to eight of such sectors (22a, 24a, 26a).

10. A method of manufacturing the non-pneumatic tire and wheel assembly in accordance with at least one of the previous claims, the method comprising forming the non-pneumatic tire and wheel assembly (10) or at least the spoke ring structure (20) by three-dimensional printing.

## Patentansprüche

1. Rad- und Non-Luftreifen-Baugruppe, die eine Struktur (50) in Form eines Rades, eine Speichenringstruktur (20), die aus einem oder mehreren Segmenten (22a, 24a, 26a) besteht, die so angeordnet sind, dass sie einen ringförmigen Speichenring bilden, wobei die Speichenringstruktur (20) eine Vielzahl von Elementen (60, 62) in Form von Speichen und einen radial äußeren Ring (30) in Form eines Laufstreifens aufweist, der am Außenumfang der Speichenringstruktur (20) angebracht ist, umfasst, und wobei die Speichenringstruktur (20) an einer in der radialen Richtung äußeren radförmigen Strukturbefestigungsfläche der Struktur (50) durch einen Presssitz befestigt ist, **dadurch gekennzeichnet, dass** die Baugruppe ferner eines oder mehrere der nachfolgend aufgeführten Merkmale umfasst, nämlich dass:
(i) ein radial innerer Abschnitt der Speichenringstruktur (20) eine axiale Breite aufweist, die kleiner ist als die axiale Breite eines radial äußeren Abschnitts der Speichenringstruktur (20) ;
(ii) die Struktur (20) in Form eines Speichenrings eine Vielzahl von Speichenringen (22, 24, 26) umfasst, die in der axialen Richtung benachbart sind ;
(ii) jedes Element (60, 62) in Form von Speichen einen inneren Abschnitt in der radialen Richtung und einen äußeren Abschnitt in der radialen Richtung aufweist; wobei der innere Abschnitt in der radialen Richtung eine axiale Breite aufweist, die kleiner als der äußere Abschnitt in der radialen Richtung ist.

2. Rad- und Non-Luftreifen-Baugruppe nach Anspruch 1, wobei der Ring (30) in Form einer Lauffläche eine oder mehrere Schichten (32, 33, 36) aus verstärktem Gewebe hat, die aus parallelen Verstärkungskorden hergestellt sind; wobei die Verstärkungskorde in der Umfangsrichtung der Rad- und Non-Luftreifen-Baugruppe (10) in eine Linie gebracht werden.

3. Rad- und Non-Luftreifen-Baugruppe nach mindestens einem der vorhergehenden Ansprüche, wobei die Elemente (60, 62) in Form von Speichen der Struktur (20) in Form eines Speichenrings an einer Verbindungsstelle miteinander verbunden sind, um eine Speiche zu bilden, die eine X-förmige Konfiguration aufweist.

4. Rad- und Non-Luftreifen-Baugruppe nach mindestens einem der vorhergehenden Ansprüche, wobei die Struktur (20) in Form eines Speichenrings aus einem polymeren Material hergestellt ist, dessen Zug-Elastizitätsmodul in einem Bereich von 15 bis 100 MPa oder in einem Bereich von 10 bis 70 MPa liegt.

5. Rad- und Non-Luftreifen-Baugruppe nach mindestens einem der vorhergehenden Ansprüche, wobei die Struktur (50) in Form eines Rades in der radialen Richtung innerhalb der Rad- und Non-Luftreifen-Baugruppe (10) in Bezug auf die maximale axiale Breite der Struktur (20) in Form eines Speichenrings ausgespart ist.

6. Rad- und Non-Luftreifen-Baugruppe nach mindestens einem der vorhergehenden Ansprüche, wobei mindestens eines der Elemente oder alle Speichenelemente (60, 62) in Form von Speichen eine Außenkante in der axialen Richtung aufweist, die abgerundet oder gesäumt ist.

7. Rad- und Non-Luftreifen-Baugruppe nach mindestens einem der vorhergehenden Ansprüche, wobei mindestens eines der Elemente oder alle Speichenelemente (60, 62) in Form von Speichen eine äußere Kante in der axialen Richtung haben, die abgerundet oder gesäumt ist, die einen Krümmungsradius in einem Bereich von 12,7 mm bis 50,8 mm oder von 25,4 mm bis 38,1 mm aufweist.

8. Rad- und Non-Luftreifen-Baugruppe nach mindestens einem der vorhergehenden Ansprüche, wobei die Struktur (20) in Form eines Speichenrings zwei, drei oder vier Speichenringe (22, 24, 26) umfasst, die in der axialen Richtung benachbart sind.

9. Rad- und Non-Luftreifen-Baugruppe nach Anspruch 8, wobei mindestens einer oder alle der oben genannten benachbarten Speichenringe (22, 24, 26) einen Ring darstellen, der aus einem Stück gefertigt ist, oder einen Speichenring (22, 24, 26) darstellen, der aus einer Anzahl von Sektoren (22a, 24a, 26a), vorzugsweise aus drei bis acht derartigen Sektoren (22a, 24a, 26a), gefertigt ist.

10. Verfahren zur Herstellung der Rad- und Non-Luftreifen-Baugruppe gemäß mindestens einem der vorhergehenden Ansprüche, wobei das Verfahren das Herstellen der Rad- und Non-Luftreifen-Baugruppe (10) oder mindestens der Struktur (20) in Form eines Speichenrings mittels eines dreidimensionalen Drucks umfasst.

## Revendications

1. Assemblage de roue et de bandage non pneumatique, qui comprend une structure (50) sous la forme d'une roue, une structure (20) sous la forme d'un anneau à rayons constituée par un ou plusieurs segments (22a, 24a, 26a) qui sont disposés pour former un anneau à rayons de forme annulaire, dans lequel la structure (20) sous la forme d'un anneau à rayons possède plusieurs éléments (60, 62) sous la forme de rayons et un anneau (30) externe, dans la direction radiale, sous la forme d'une bande de roulement, qui est monté sur la circonférence externe de la structure (20) sous la forme d'un anneau à rayons, et dans lequel la structure (20) sous la forme d'un anneau à rayons est fixée à une surface de montage de structure sous la forme d'une roue, externe dans la direction radiale, de la structure (50) sous la forme d'une roue par le biais d'un ajustement serré, **caractérisé en ce que** l'assemblage comprend en outre une ou plusieurs des caractéristiques indiquées ci-après, à savoir le fait que :
(i) une portion interne, dans la direction radiale, de la structure (20) sous la forme d'un anneau à rayons possède une largeur axiale qui est inférieure à la largeur axiale d'une portion externe, dans la direction radiale, de la structure (20) sous la forme d'un anneau à rayons ;
(ii) la structure (20) sous la forme d'un anneau à rayons comprend un certain nombre d'anneaux à rayons (22, 24, 26) qui sont adjacents dans la direction axiale ;
(ii) chaque élément (60, 62) sous la forme d'un rayon possède une portion interne, dans la direction radiale, et une portion externe, dans la direction radiale ; dans lequel la portion interne, dans la direction radiale, possède une largeur axiale qui est inférieure à la portion externe, dans la direction radiale.

2. Assemblage de roue et de bandage non pneumatique selon la revendication 1, dans lequel l'anneau (30) sous la forme d'une bande de roulement possède une ou plusieurs couches (32, 33, 36) de tissu renforcé, qui sont réalisées à partir de câblés de renforcement parallèles ; dans lequel les câblés de renforcement sont mis en alignement dans la direction circonférentielle de l'assemblage de roue et de bandage non pneumatique (10).

3. Assemblage de roue et de bandage non pneumatique selon au moins une des revendications précédentes, dans lequel les éléments (60, 62) sous la forme de rayons de la structure (20) sous la forme d'un anneau à rayons sont joints les uns aux autres à une jonction dans le but de former un rayon qui possède une configuration sous la forme d'un X.

4. Assemblage de roue et de bandage non pneumatique selon au moins une des revendications précédentes, dans lequel la structure (20) sous la forme d'un anneau à rayons est réalisée à partir d'une matière polymère dont le module d'élasticité en traction se situe dans une plage allant de 15 à 100 MPa ou dans une plage allant de 10 à 70 MPa.

5. Assemblage de roue et de bandage non pneumatique selon au moins une des revendications précédentes, dans lequel la structure (50) sous la forme d'une roue est évidée, dans la direction radiale, au sein de l'assemblage de roue et de bandage non pneumatique (10) par rapport à la largeur axiale maximale de la structure (20) sous la forme d'un anneau à rayons.

6. Assemblage de roue et de bandage non pneumatique selon au moins une des revendications précédentes, dans lequel au moins un des éléments (60, 62) sous la forme de rayons ou la totalité de ces derniers possède(nt) un bord externe, dans la direction axiale, qui est arrondi ou festonné.

7. Assemblage de roue et de bandage non pneumatique selon au moins une des revendications précédentes, dans lequel au moins un des éléments (60, 62) sous la forme de rayons ou la totalité de ces derniers possède(nt) un bord externe, dans la direction axiale, qui est arrondi ou festonné, qui présente un rayon de courbure dans une plage allant de 12,7 mm à 50,8 mm ou de 25,4 mm à 38,1 mm.

8. Assemblage de roue et de bandage non pneumatique selon au moins une des revendications précédentes, dans lequel la structure (20) sous la forme d'un anneau à rayons comprend deux, trois ou quatre anneaux à rayons (22, 24, 26) qui sont adjacents dans la direction axiale.

9. Assemblage de roue et de bandage non pneumatique selon la revendication 8, dans lequel au moins un desdits anneaux à rayons (22, 24, 26) adjacents ou la totalité de ces derniers représente(nt) un anneau réalisé en une seule pièce ou représente(nt) un anneau à rayons (22, 24, 26) qui est réalisé à partir d'un certain nombre de secteurs (22a, 24a, 26a), de préférence à partir de trois à huit secteurs (22a, 24a, 26a) de ce type.

10. Procédé de fabrication de l'assemblage de roue et de bandage non pneumatique en conformité avec au moins une des revendications précédentes, le procédé comprenant le fait de former l'assemblage de roue et de bandage non pneumatique (10) ou au moins la structure (20) sous la forme d'un anneau à rayons par l'intermédiaire d'une impression en trois dimensions.
